# FASCICULE DE BREVET EUROPEEN

(11) **EP 4 347 393 B1**
(45) Date de publication et mention de la délivrance du brevet: **14.05.2025**
(21) Numéro de dépôt: 22730517.4
(22) Date de dépôt: 25.05.2022
(51) Int. Cl.: B64C 25/44, B60L 7/28, B60T 13/74, B60T 8/32, F16D 63/00, F16D 65/18

(54) **ROUE A DISPOSITIF DE FREINAGE MAGNETIQUE A COURANT DE FOUCAULT, ET ATTERRISSEUR D'AERONEF EQUIPE D'UNE TELLE ROUE**
RAD MIT MAGNETISCHER WIRBELSTROMBREMSVORRICHTUNG UND FLUGZEUGFAHRWERK MIT EINEM SOLCHEN RAD
WHEEL WITH EDDY CURRENT MAGNETIC BRAKING DEVICE AND AIRCRAFT LANDING GEAR PROVIDED WITH SUCH A WHEEL

(30) Priorité: 31.05.2021 FR 2105729
(43) Date de publication de la demande: 10.04.2024
(73) Titulaire: Safran Landing Systems, 78140 Vélizy-Villacoublay (FR)
(72) Inventeur: PASCAL, Vincent, 77550 MOISSY-CRAMAYEL (FR); SENECHAL, Yannick, 77550 MOISSY-CRAMAYEL (FR); KLIM, Graeme, 77550 MOISSY-CRAMAYEL (FR)
(74) Mandataire: Cabinet Boettcher
(86) Numéro de dépôt international: PCT/EP2022/064338
(87) Numéro de publication internationale: WO 2022/253690

(56) Documents cités:
- WO-A1-2014/029962
- WO-A1-2019/204455
- CN-U- 206 585 444
- US-A1- 2020 300 310

## Description

La présente invention concerne le domaine du freinage des roues de véhicule telles que les roues d'aéronef.

### ARRIERE PLAN DE L'INVENTION

Une roue d'aéronef comprend généralement une jante reliée par un voile à un moyeu monté pour tourner sur un arbre (essieu ou fusée) support de roue solidaire d'une extrémité d'un atterrisseur.

Il est connu des dispositifs de freinage par friction comprenant une pile de disques de freinage qui est logée dans un espace s'étendant entre la jante et le moyeu et qui comprend une alternance de disques rotoriques liés en rotation avec la roue et de disques statoriques fixes par rapport au support de roue. Le dispositif de freinage comprend également des actionneurs hydrauliques ou électromécaniques montés sur un porte-actionneurs et agencés pour appliquer un effort de freinage commandé sur la pile de disques de manière à freiner la rotation de la roue.

Il a été proposé, notamment dans le document FR2953196, d'équiper de telles roues freinées d'un frein auxiliaire électromagnétique assurant une dissipation d'énergie par d'autres moyens que la friction mécanique.

Sont en outre connus des dispositifs de freinage magnétique à courant de Foucault (dénommé « Eddy curent brake » en anglais) utilisés pour le freinage de roues de véhicules et plus particulièrement de roues d'aéronef. Le document WO2014/029962 A1 décrit un tel dispositif comprenant un stator qui est pourvu d'un ou plusieurs aimants et qui est monté en regard d'un rotor électriquement conducteur.

Le document US2020/300310 A1 décrit lui aussi un dispositif de freinage magnétique à courant de Foucault.

D'une manière générale, les performances d'un dispositif de freinage magnétique à courant de Foucault dépendent de la puissance des aimants utilisés et de leurs dimensions. Le dispositif de freinage est donc relativement lourd et encombrant lorsque la puissance maximale de freinage requise est importante. Tel est le cas par exemple d'une utilisation sur avion, alors même que la masse et l'encombrement sont des contraintes sévères pour cette utilisation.

En outre, pour actionner les dispositifs de freinage magnétique, il est connu de déplacer les stators par rapport aux rotors. Cependant, l'espace libre au niveau de la roue est extrêmement réduit de sorte que l'implantation d'actionneurs y est compliquée, ce qui est encore plus vrai si le nombre de rotors et/ou de stators augmente.

### OBJET DE L'INVENTION

L'invention a notamment pour but de proposer un dispositif de freinage magnétique à courant de Foucault remédiant au moins en partie aux inconvénients précités.

### RESUME DE L'INVENTION

A cet effet, on prévoit, selon l'invention, une roue comprenant une jante montée pour tourner sur un support comprenant un arbre définissant un axe primaire de rotation, et un dispositif de freinage magnétique à courant de Foucault comprenant au moins un premier jeu de freinage comportant un premier stator et un deuxième stator qui sont liés au support et un rotor lié à la jante et disposé entre les stators de telle manière que chaque stator ait une première face en regard d'une face du rotor et séparée de ladite face par un entrefer, le rotor étant en matériau électriquement conducteur et les stators portant une pluralité d'aimants émettant via la première face un flux magnétique apte à engendrer, en fonction de l'entrefer, des courants de Foucault dans le rotor lorsque le rotor pivote avec la roue. Le dispositif comprend un actionneur qui comprend au moins un premier ensemble de transmission et un deuxième ensemble de transmission comportant chacun un pignon monté sur le support pour pivoter autour d'un axe secondaire de rotation parallèle à l'axe primaire, une barre de manœuvre s'étendant selon l'axe secondaire, un premier organe de liaison mécanique de la barre de manœuvre au pignon et au moins un deuxième organe de liaison mécanique de la barre de manœuvre à un des stators. Les organes de liaison mécanique sont agencés de telle manière que la rotation des pignons provoque un déplacement des stators parallèlement à l'axe secondaire en des sens opposés pour faire varier l'entrefer, au moins l'un des organes de liaison mécanique de chaque ensemble de transmission étant agencé pour assurer une liaison hélicoïdale de type vis/écrou.

Cet agencement permet d'optimiser et de concentrer le flux magnétique et donc d'engendrer un surplus de courant de Foucault, procurant ainsi un couple de freinage relativement important supérieur à celui qui serait obtenu avec deux ensembles constitués d'un stator et d'un rotor. La structure de l'actionneur de l'invention est particulièrement avantageuse car l'actionnement d'un tel agencement avec des actionneurs classiques confèrerait au dispositif de freinage magnétique un volume et une masse plus importants que ceux obtenus en utilisant l'actionneur de l'invention.

Selon un mode de réalisation, le premier ensemble de transmission est lié au premier stator et le deuxième ensemble de transmission est lié au deuxième stator. La barre de manœuvre de chaque ensemble de transmission est montée sur le support pour être fixe en rotation et pour coulisser selon l'axe secondaire. Le premier organe de liaison mécanique assure la liaison hélicoïdale et le deuxième organe de liaison mécanique est agencé pour lier la barre de manœuvre et le stator concerné en translation selon l'axe secondaire de telle manière que la rotation du pignon de chaque ensemble de transmission provoque la translation de la barre de manœuvre et du stator concerné selon l'axe secondaire, la liaison hélicoïdale du premier ensemble de transmission et la liaison hélicoïdale du deuxième ensemble de transmission ayant des sens opposés.

Selon un autre mode de réalisation, les barres de manœuvre sont montées sur le support pour être fixes en translation et libres en rotation selon l'axe secondaire. Le premier organe de liaison mécanique est agencé pour lier en rotation le pignon et la barre de manœuvre de l'ensemble de transmission concerné et le deuxième organe de liaison mécanique de chaque barre de manœuvre de chaque ensemble de transmission assure la liaison hélicoïdale avec le stator de telle manière que la rotation du pignon et de la barre de manœuvre de chaque ensemble de transmission entraîne une translation du stator selon l'axe secondaire, la liaison hélicoïdale du premier stator et la liaison hélicoïdale du deuxième stator ayant des sens opposés.

L'invention concerne également un atterrisseur et un aéronef équipé d'au moins une telle roue.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
[Fig. 1] la figure 1 est une vue schématique partielle d'un aéronef équipé d'atterrisseur selon l'invention ;
[Fig. 2] la figure 2 est une vue en perspective d'une roue selon l'invention, la roue étant dépourvue de son pneumatique ;
[Fig. 3] la figure 3 est une vue schématique partielle d'une roue selon un premier mode de réalisation de l'actionneur de l'invention, en coupe selon le plan III de la figure 2 ;
[Fig. 4] la figure 4 est une vue schématique partielle d'une roue selon le premier mode de réalisation de l'invention, en coupe selon le plan IV de la figure 2 ;
[Fig. 5] la figure 5 est une vue schématique partielle d'une roue selon le premier mode de réalisation de l'invention, en coupe selon le plan V de la figure 2 ;
[Fig. 6] la figure 6 est une vue en perspective de la couronne motrice et des pignons des ensembles de transmission selon une première variante du premier mode de réalisation ;
[Fig. 7] la figure 7 est une vue analogue à celle de la figure 4 de la roue selon cette variante de réalisation ;
[Fig. 8] la figure 8 est une vue analogue à celle de la figure 5 de la roue selon cette variante de réalisation ;
[Fig. 9] la figure 9 est une vue partielle de face de la roue montrant les pignons des ensembles de transmission selon une deuxième variante du premier mode de réalisation ;
[Fig. 10] la figure 10 est une vue analogue à celle de la figure 4 de la roue selon un deuxième mode de réalisation de l'actionneur de l'invention ;
[Fig. 11] la figure 11 est une vue analogue à celle de la figure 5 de la roue selon le deuxième mode de réalisation.
[Fig. 12] la figure 12 est une vue schématique partielle d'un stator d'un dispositif de freinage selon un premier mode de réalisation d'un stator de l'invention ;
[Fig. 13] la figure 13 est une vue schématique partielle d'un stator d'un dispositif de freinage selon un deuxième mode de réalisation d'un stator de l'invention ;
[Fig. 14] la figure 14 est une vue schématique partielle d'un stator d'un dispositif de freinage selon un troisième mode de réalisation d'un stator de l'invention.

### DESCRIPTION DETAILLEE DE L'INVENTION

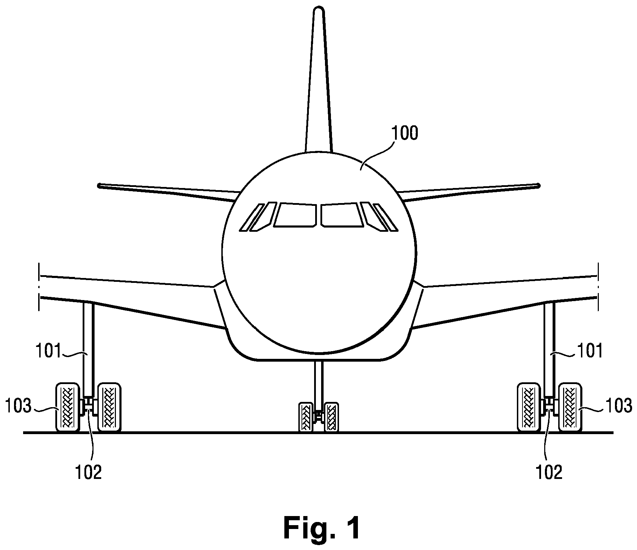

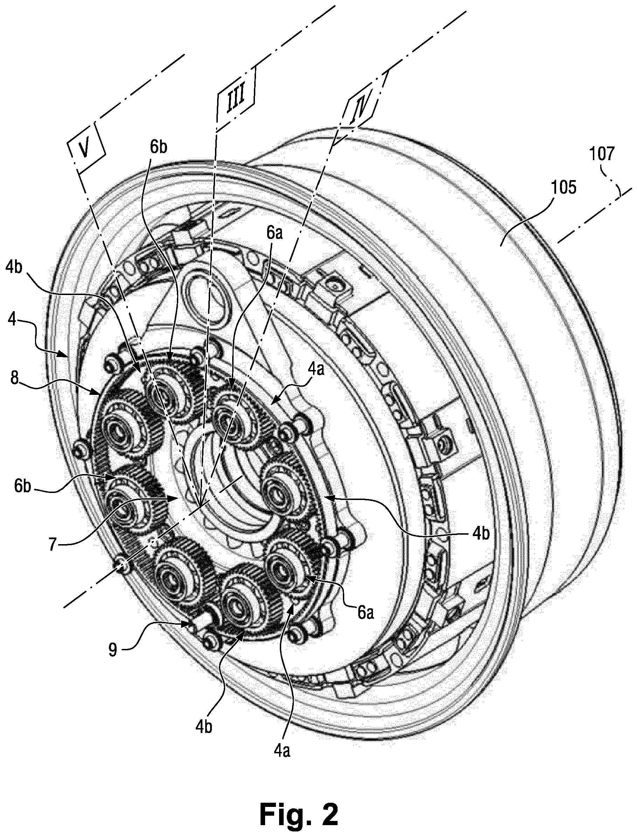

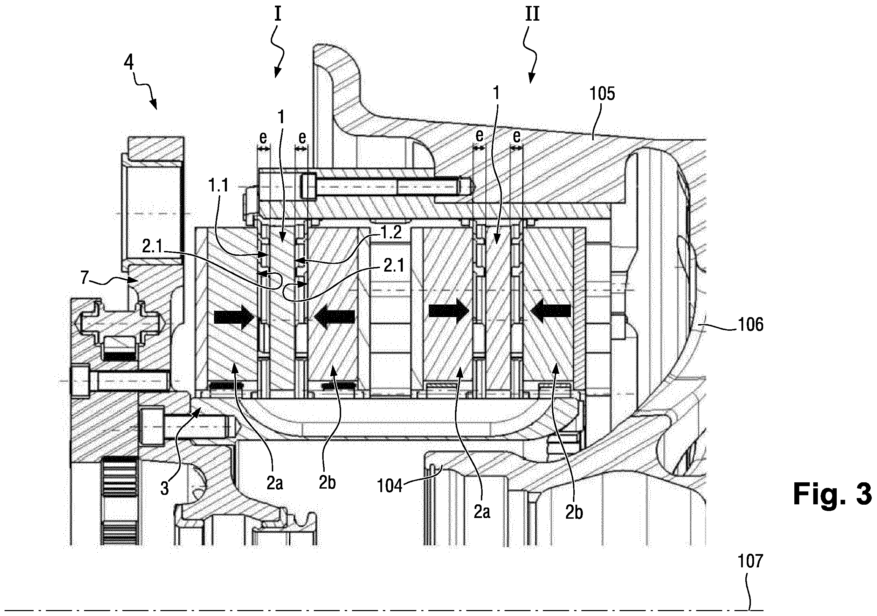

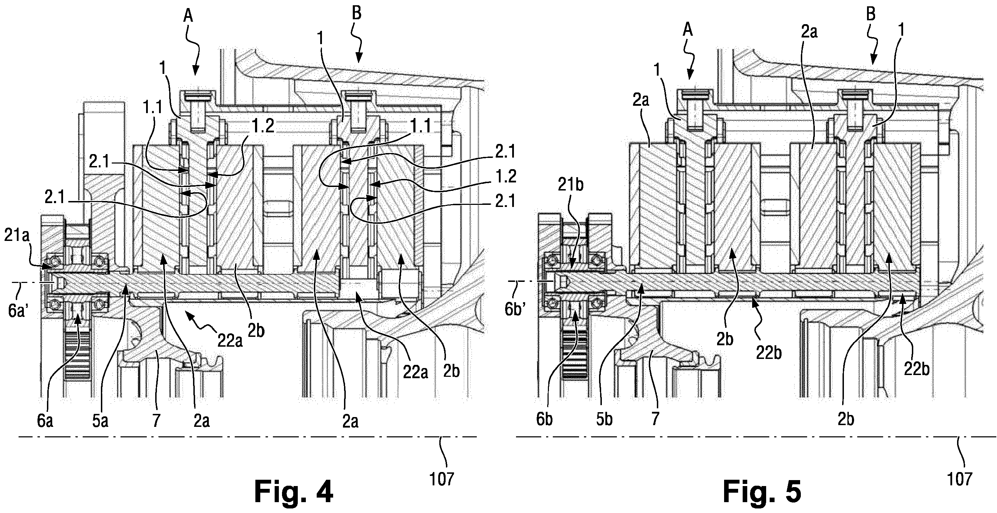

En référence aux figures 1 à 5, le premier mode de réalisation de l'invention est décrit en application à un aéronef 100 comportant des atterrisseurs 101. Chaque atterrisseur 101 comporte une jambe ayant une extrémité pourvue de deux arbres 102 coaxiaux sur chacun desquels est montée pour pivoter une roue 103. Chaque roue 103 comporte de façon connue en soi un moyeu 104 monté pour pivoter sur l'arbre 102 et une jante 105 reliée au moyeu 104 par un voile 106. Les arbres 102 définissent un axe primaire 107 de rotation de la roue 103.

Selon l'invention, les roues 103 sont équipées chacune d'un dispositif de freinage magnétique.

Le dispositif de freinage magnétique comprend des éléments mobiles en rotation, ou rotors 1, et des éléments fixes en rotation, ou stators 2.

Plus précisément ici, les stators 2 et les rotors 1 sont en forme de disques, coaxiaux à la roue 103, ayant donc des axes centraux confondus avec l'axe primaire de rotation 107. Les stators 2 et les rotors 1 sont agencés en deux triplets formant chacun un jeu de freinage I, II. Chaque jeu de freinage I, II comprend un rotor 1 disposé entre deux stators 2a, 2b ayant chacun une face principale 2.1 s'étendant en regard d'une des faces principale 1.1, 1.2 du rotor 1. Les faces 1.1, 1.2, 2.1 sont parallèles les unes aux autres. Sur les figures, on a ajouté les caractères a, b pour distinguer le stator se trouvant en regard de la face 1.1 et le stator se trouvant en regard de la face 1.2. Chaque jeu I, II comprend donc un rotor 1, un stator 2a et un stator 2b. Dans la description, on emploie ces caractères a, b uniquement quand il est nécessaire de distinguer les stators 2 entre eux.

Les stators 2 sont liés en rotation à l'arbre 102 ou à la jambe de l'atterrisseur 101, ici par l'intermédiaire d'un tube de torsion 3 (ou tube de couple) solidaire d'une platine porte-actionneur 7 fixée rigidement à l'arbre 102, tandis que les rotors 1 sont liés en rotation à la roue 103, ici à la jante 105 de la roue 103, de manière connue en elle-même. Ainsi, dans chaque jeu I, II, chaque rotor 1 tourne sur lui-même autour de son axe central par rapport aux stators 2a, 2b qui l'encadrent : pendant ce déplacement du rotor 1 selon une direction circonférentielle, les faces principales 1.1, 1.2 restent en regard des faces principales 2.1, parallèles à celles-ci et séparées par un entrefer e. Les stators 2a sont situés en regard de la face 1.1 du rotor 1 orientée vers la platine porte-actionneur 7 ; les stators 2b sont situés en regard de la face 1.2 du rotor 1 orientée à l'opposé vers le voile de la roue 103. Le tube de torsion 3 est pourvu de nervures pour former des glissières permettant à chacun des stators 2 de coulisser sans rotation sur le tube de torsion 3 de telle manière que chaque stator 2 soit mobile selon une direction axiale du tube de torsion 3 entre une première position dans laquelle le rotor 1 et le stator 2 sont rapprochés l'un de l'autre et ont leurs faces principales 1.1, 1.2, 2.1 séparées par une première valeur d'entrefer prédéterminée et une deuxième position dans laquelle le rotor 1 et le stator 2 sont écartés l'un de l'autre et ont leurs faces principales 1.1, 1.2, 2.1 séparées par une deuxième valeur d'entrefer prédéterminée supérieure à la première valeur d'entrefer prédéterminée.

Le dispositif de freinage comprend un actionneur, généralement désigné en 4, commandable par le pilote de l'avion de manière connue en elle-même, pour déplacer les stators 2 entre les deux positions précitées. Il est prévu une butée axiale, de type butée à roulement ou butée à aiguilles, interposée entre les rotors 1 et les stators 2

(ou entre des parties liées à ceux-ci) pour s'assurer que les stators 2 ne puissent être rapprochés des rotors 1 au-delà de la première valeur d'entrefer prédéterminée.

L'actionneur 4 comprend une pluralité d'ensembles de transmission généralement désignés en 4a pour déplacer les stators 2a et une pluralité d'ensembles de transmission généralement désignés en 4b pour déplacer les stators 2b. Les ensembles de transmission 4a sont disposés en alternance par rapport aux ensembles de transmission 4b.

Chaque ensemble de transmission 4a comprend une barre de manœuvre 5a montée sur le tube de torsion 3 pour s'étendre parallèlement à l'axe primaire de rotation 107 et coulisser sans rotation selon ledit axe.

La barre de manœuvre 5a est reliée par un premier organe de liaison mécanique 21a à un pignon 6a monté dans la platine porte-actionneur 7 par des roulements pour être fixe en translation et mobile en rotation autour d'un axe secondaire de rotation 6a' colinéaire à l'axe longitudinal de la barre de manœuvre 5a. Le premier organe de liaison mécanique 21a comprend un filet réalisé sur l'extrémité de la barre de manœuvre 5a et un taraudage réalisé dans le pignon 6a et accueillant l'extrémité de la barre de manœuvre 5a de telle manière qu'une rotation du pignon 6a provoque une translation de la barre de manœuvre 5a dans un sens ou dans l'autre, selon le sens de rotation du pignon 6a. Les pignons 6a engrènent avec une denture interne d'une couronne 8 qui est centrée sur l'axe primaire de rotation 107 et qui entoure les pignons 6a. La couronne 8 est maintenue dans sa position centrée par des galets montés pour pivoter sur la platine porte-actionneur 7 autour d'axes parallèles à l'axe primaire de rotation 107 et en contact avec un pourtour externe de la couronne 8. La couronne 8 est entrainée en rotation par un pignon meneur 9 monté pour pivoter sur la platine porte-actionneur 7 autour d'un axe parallèle à l'axe primaire de rotation 107.

Les moyens d'entraînement en rotation du pignon meneur ne sont pas représentés mais peuvent être de tout type (à engrenage, courroie, chaîne, crémaillère...).

La barre de manœuvre 5a est reliée par un deuxième organe de liaison mécanique 22a à chaque stator 2a. Chaque deuxième organe de liaison mécanique 22a comprend deux collerettes s'étendant radialement en saillie de la barre de manœuvre 5a pour accueillir entre elles une portion de la circonférence interne d'un des stators 2a et former des butées d'entraînement des stators 2a entre leurs deux positions axiales.

Chaque ensemble de transmission 4b comprend une barre de manœuvre 5b montée sur le tube de torsion 3 pour s'étendre parallèlement à l'axe primaire de rotation 107 et coulisser sans rotation selon ledit axe.

La barre de manœuvre 5b est reliée par un premier organe de liaison mécanique 21b à un pignon 6b monté dans la platine porte-actionneur 7 par des roulements pour être fixe en translation et mobile en rotation autour d'un axe secondaire de rotation 6b' colinéaire à l'axe longitudinal de la barre de manœuvre 5b. Le premier organe de liaison mécanique comprend un filet réalisé sur l'extrémité de la barre de manœuvre 5b et un taraudage réalisé dans le pignon 6b et accueillant l'extrémité de la barre de manœuvre 5a de telle manière qu'une rotation du pignon 6b provoque une translation de la barre de manœuvre dans un sens ou dans l'autre, selon le sens de rotation du pignon 6b. Les pignons 6b engrènent avec la denture interne de la couronne 8.

La barre de manœuvre 5b est reliée par un deuxième organe de liaison mécanique à chaque stator 2b. Chaque deuxième organe de liaison mécanique comprend deux collerettes 20b s'étendant radialement en saillie de la barre de manœuvre 5b pour accueillir entre elles une portion de la circonférence interne d'un des stators 2b et former des butées d'entraînement des stators 2b entre leurs deux positions axiales.

La liaison hélicoïdale formée entre les pignons 6b et les barres de manœuvre 5b est de sens opposé à la liaison hélicoïdale formée entre les pignons 6a et les barres de manœuvre 5a. On comprend donc que, quand la couronne 8 tourne dans un sens, elle entraîne les pignons 6a, 6b dans le même sens ; en revanche, les barres de manœuvre 5a se déplacent dans un sens opposé au sens de déplacement des barres de manœuvre 5b. Une rotation de la couronne 8 dans un premier sens provoque donc un rapprochement des stators 2a avec les stators 2b (l'entrefer e avec les rotors 1 diminue) tandis qu'une rotation de la couronne 8 dans un deuxième sens provoque un éloignement des stators 2a d'avec les stators 2b respectivement (l'entrefer e avec les rotors 1 augmente).

Les rotors 3 sont en cuivre ou en tout autre matériau électriquement conducteur.

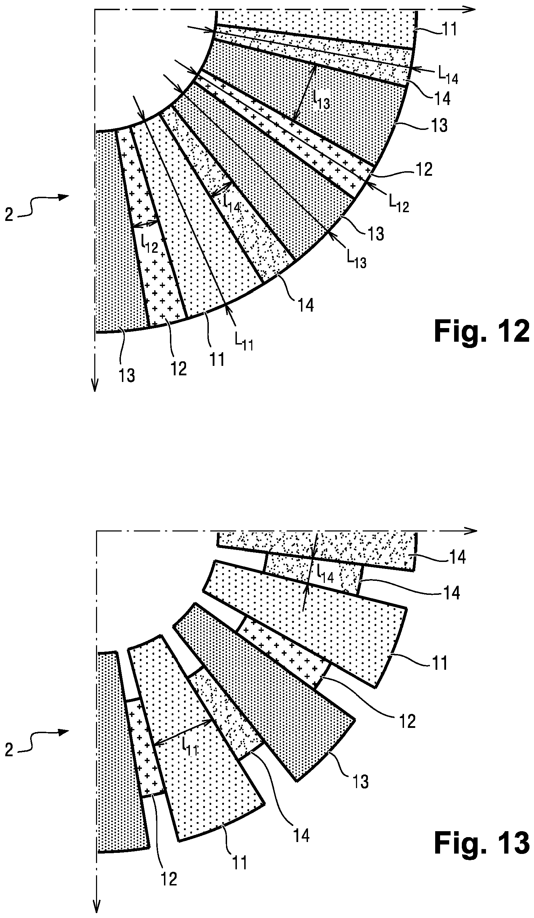

En référence aux figures 12, 13 et 14 également, chaque stator 2 de chaque triplet comporte une pluralité d'aimants aptes à engendrer des courants de Foucault dans le rotor 1 lorsque le stator 2 est dans la première position et que le rotor 3 pivote en face du stator 2. Les aimants, ici à base de terres rares, sont par exemple au nombre de 16 et sont de préférence fixés sur un support en acier magnétique, voire sur un support non magnétique.

La pluralité d'aimants comprend des premiers aimants 11, 13 ayant un premier vecteur de magnétisation sensiblement perpendiculaire à la face principale 2.1 et étant séparés deux à deux par un deuxième aimant 12, 14 ayant un deuxième vecteur de magnétisation sensiblement perpendiculaire aux premiers vecteurs de magnétisation des deux premiers aimants 11, 13 entre lesquels se trouve le deuxième aimant 12, 14. On rappelle que le vecteur de magnétisation indique la direction du champ magnétique engendré par un aimant et s'étend dans l'aimant du pôle Sud au pôle Nord. Plus précisément, les aimants 11, 12, 13, 14 ont des formes de secteurs angulaires et ont une longueur L mesurée selon une direction radiale du stator 2 et une largeur moyenne 1 mesurée selon une direction localement tangentielle des disques (c'est-à-dire perpendiculairement à la direction de la longueur L) à moitié de ladite longueur L. Les longueurs L et largeurs 1 sont mesurées selon des directions localement parallèles aux surfaces en regard (les faces principales 1.1, 1.2, 2.1).

Les aimants 11, 12, 13, 14 sont disposés selon un motif de Halbach, en alternance selon la direction circonférentielle du stator 2 comme suit : un aimant 11, un aimant 12, un aimant 13, un aimant 14, un aimant 11, un aimant 12, un aimant 13, un aimant 14 et ainsi de suite... En l'occurrence :
- chaque aimant 11 a son vecteur de magnétisation qui sort de la face principale 2.1 (son pôle Nord débouche sur la face principale 2.1),
- chaque aimant 12 a son vecteur de magnétisation qui s'étend depuis l'aimant 11 voisin vers l'aimant 13 voisin,
- chaque aimant 13 a son vecteur de magnétisation qui rentre dans la face principale 2.1 (son pôle Sud débouche sur la face principale 2.1),
- chaque aimant 14 a son vecteur de magnétisation qui s'étend depuis l'aimant 11 voisin vers l'aimant 13 voisin.

On comprend que les aimants 12, 14 disposés de chaque côté d'un même aimant 11 ont leur vecteur de magnétisation orientés dans des sens opposés.

Dans chaque triplet, chaque aimant 11 d'un des deux stators 2 fait face à un aimant 13 de l'autre des deux stators 2, et inversement, de sorte que tous les aimants 11 font face à des aimants 13 et s'attirent mutuellement au travers du rotor 3, ce qui améliore les performances.

Selon une version avantageuse de l'invention, les aimants 11, 12, 13, 14 ont des largeurs l₁₁, l₁₂, l₁₃, l₁₄ telles que les premiers aimants 11, 13 sont espacés deux à deux d'une première distance (égale à la largeur l₁₂, l₁₄) inférieure à une deuxième distance (égale à la largeur l₁₁, l₁₃) séparant deux à deux les deuxièmes aimants 12, 14. Les meilleurs résultats sont obtenus lorsque la largeur l₁₂, l₁₄ des deuxièmes aimants 12, 14 est 70% environ celles - l₁₁, l₁₃ - des premiers aimants 11, 13.

En référence à la figure 12, les longueurs L₁₁, L₁₂, L₁₃, L₁₄ des aimants 11, 12, 13, 14 sont identiques les unes aux autres.

En référence à la figure 13, les longueurs L₁₁, L₁₃ des aimants 11, 13 sont identiques les unes aux autres et les longueurs L₁₂, L₁₄ des aimants 12, 14 sont identiques les unes aux autres. Les longueurs L₁₁, L₁₃ des aimants 11, 13 sont supérieures aux longueurs L₁₂, L₁₄ des aimants 12, 14. De préférence, la longueur L₁₂, L₁₄ des deuxièmes aimants 12, 14 est 70% environ celles - L₁₁, L₁₃ - des premiers aimants 11, 13.

Dans l'agencement représenté sur la figure 13, les aimants 12, 14 sont positionnés symétriquement sur un cercle passant par le centre géométrique des pôles Nord des aimants 11 et Sud des aimants 13.

On comprend que, dans les deux modes de réalisation, les aimants 12, 14 occupent sur la face principale 2.1 une surface moindre que celle des aimants 11, 13.

L'agencement des aimants 11, 12, 13, 14 permet d'optimiser et de concentrer le flux magnétique produit par les aimants 11, 13 en réduisant le chemin de retour du flux magnétique qui passe par les aimants 12, 14 et non par leur support dont la masse peut être réduite puisqu'il n'a pas besoin d'assurer une fonction de conduction du flux magnétique.

Les deux modes de réalisation ci-dessus permettent tous les deux une augmentation du couple de freinage fourni tout en limitant la masse et l'encombrement du dispositif.

Le premier mode de réalisation permet un couple de freinage plus élevé que le deuxième mode de réalisation mais présente en revanche un poids plus important.

Chaque rotor 1 a une épaisseur telle qu'un effet de peau (autrement appelé effet pelliculaire ou effet Kelvin) soit engendré depuis chaque face 1.1 du rotor 1 sur plus de la moitié de l'épaisseur du rotor 1 au moins sur une plage de vitesses relatives possibles du rotor 1 par rapport aux stators 2. Les courants de Foucault engendrés depuis les deux faces 1.1 vont alors circuler dans la partie centrale de chaque rotor 1, ce qui va augmenter le couple de freinage. On obtient ainsi une « superposition des effets de peau », l'épaisseur du rotor 1 étant suffisamment faible pour obtenir cet effet tout en satisfaisant les contraintes thermiques et mécaniques. Dans un exemple, cet effet donne environ 60% de performance en plus.

On comprend que pour provoquer le freinage, l'actionneur de commande est piloté pour amener les stators 2 dans la première position et que, pour interrompre le freinage, l'actionneur de commande est piloté pour amener les stators 2 dans la deuxième position, position dans laquelle les aimants ne permettent pas d'engendrer dans les rotors des courants de Foucault suffisants pour provoquer le freinage des rotors. On notera qu'en dessous d'une certaine vitesse de rotation des rotors 1, le couple de freinage est négligeable quelle que soit la position des stators. Il faudra alors éventuellement envisager un frein additionnel.

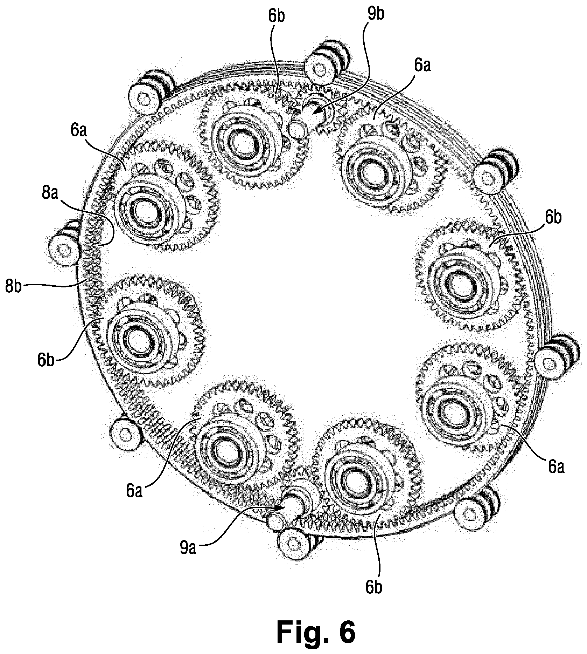

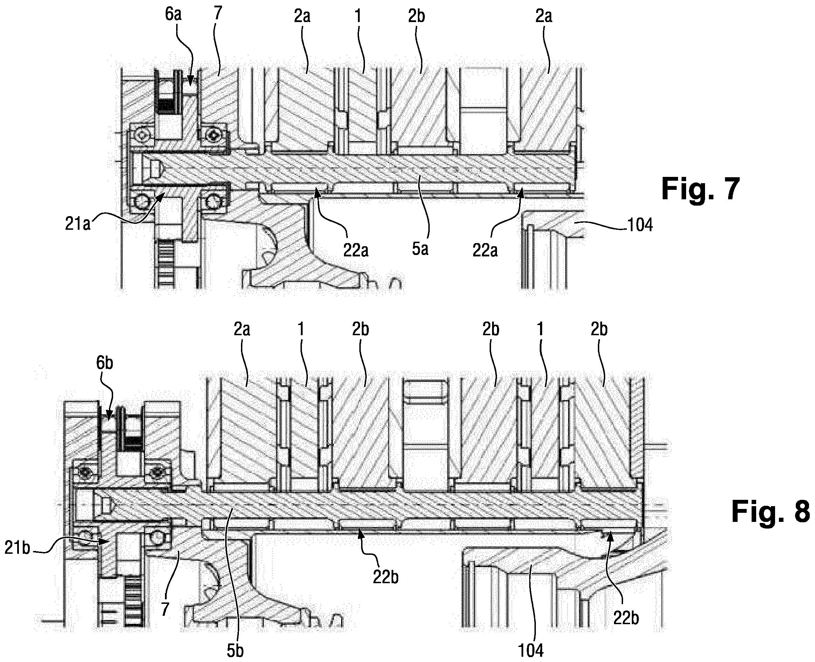

Dans la variante des figures 6 à 8, les pignons 6a sont reliés aux barres de manœuvre 5a par une liaison hélicoïdale de même sens que celle reliant les pignons 6b aux barres de manœuvre 5b.

Les pignons 6a engrènent avec la denture intérieure d'une couronne 8a entrainée en rotation par un pignon 9a tandis que les pignons 6b engrènent avec la denture intérieure d'une couronne 8b entrainée en rotation par un pignon 9b. La couronne 8b est superposée à la couronne 8a qui est la couronne la plus proche des jeux de freinage A, B. Les pignons 8a sont donc plus proches des stators 2a1 que les pignons 8b.

On comprend que, dans cette variante, les pignons moteurs 9a, 9b entraînent les couronnes 8a, 8b dans des premiers sens opposés pour rapprocher respectivement chaque stator 2a du rotor 1 et chaque stator 2b du rotor 1 et dans des deuxièmes sens opposés pour écarter respectivement chaque stator 2a du rotor 1 et chaque stator 2b du rotor 1.

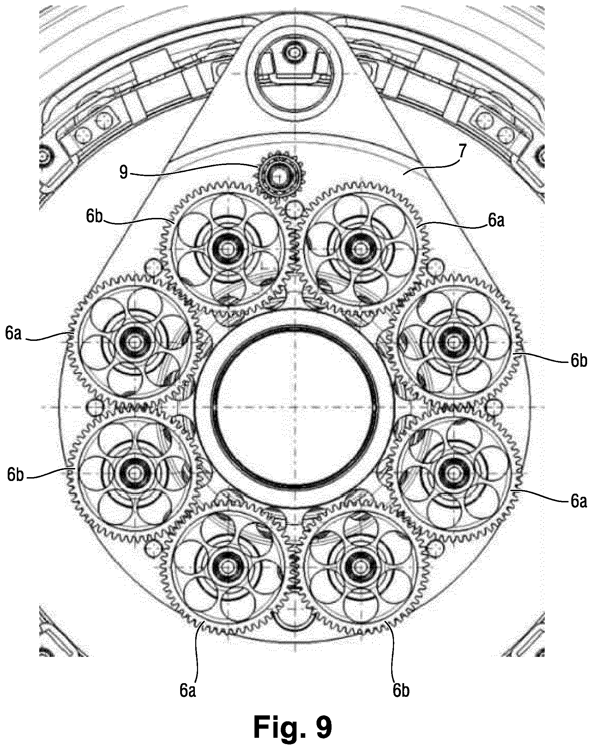

Dans la variante de la figure 9, la couronne 8 est supprimée. Les pignons 6a, 6b adjacents engrènent les uns avec les autres deux à deux. Un pignon moteur 9 engrène avec un des pignons 6b de sorte que le mouvement que le pignon moteur 9 communique audit un des pignons 6b est communiqué de proche en proche aux autres pignons 6a, 6b. Comme un pignon 6b est disposé entre chaque paire de pignons 6a, tous les pignons 6b tournent dans le même sens qui est opposé au sens dans lequel les pignons 6a tournent.

Ainsi, selon un premier sens de rotation du pignon moteur 9, les pignons 6a, 6b déplacent les barres de manœuvre 5a, 5b pour rapprocher respectivement chaque stator 2a du rotor 1 et chaque stator 2b du rotor 1b et, selon un deuxième sens de rotation du pignon moteur 9, les pignons 6a, 6b déplacent les barres de manœuvre 5a, 5b pour écarter chaque stators 2a du rotor 1 et chaque stator 2b du rotor 1.

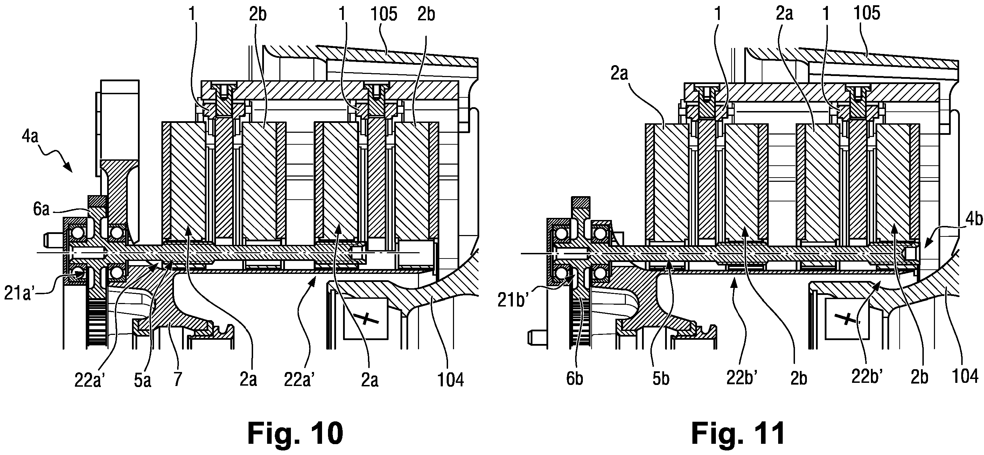

Les éléments identiques ou analogues à ceux précédemment décrits porteront la même référence numérique que ces derniers dans la description qui suit du deuxième mode de réalisation de l'actionneur en relation avec les figures 10 et 11.

Dans le deuxième mode de réalisation de l'actionneur 4, l'actionneur 4 comprend comme précédemment une pluralité d'ensembles de transmission généralement désignés en 4a pour déplacer les stators 2a et une pluralité d'ensembles de transmission généralement désignés en 4b pour déplacer les stators 2b. Les ensembles de transmission 4a sont disposés en alternance par rapport aux ensembles de transmission 4b.

Chaque ensemble de transmission 4a comprend une barre de manœuvre 5a montée sur le tube de torsion 3 pour s'étendre parallèlement à l'axe primaire de rotation 107 et pivoter sans coulissement selon ledit axe.

La barre de manœuvre 5a est reliée par un premier organe de liaison mécanique 21a' à un pignon 6a monté dans la platine porte-actionneur 7 par des roulements pour être fixe en translation et mobile en rotation autour d'un axe secondaire de rotation 6a' colinéaire à l'axe longitudinal de la barre de manœuvre 5a. Le premier organe de liaison mécanique 21a' assure une liaison encastrement de l'extrémité de la barre de manœuvre 5a dans le pignon 6a. Le premier organe de liaison mécanique 21a' peut être une soudure, de la colle, un emboîtement, un ajustement serré, un boulon, une goupille... Ici, la barre de manœuvre 5a, le premier organe de liaison mécanique 21a' et le pignon 6a sont en une seule pièce. Ainsi, une rotation du pignon 6a provoque une rotation de la barre de manœuvre 5a dans un sens ou dans l'autre, selon le sens de rotation du pignon 6a. Les pignons 6a engrènent avec une denture interne d'une couronne qui est centrée sur l'axe primaire de rotation 107 et qui entoure les pignons 6a. Cette couronne est identique à la couronne 8 et est montée et entrainée en rotation comme cette dernière.

La barre de manœuvre 5a est reliée par un deuxième organe de liaison mécanique 22a' à chaque stator 2a. Chaque deuxième organe de liaison mécanique 22a' comprend un filet s'étendant autour de la barre de manœuvre 5a et coopérant avec un taraudage ménagé dans la circonférence interne du stator 2a. Les deux deuxièmes organes de liaison mécanique 22a' assurent une liaison hélicoïdale entre la barre de manœuvre 5a et les stators 2a.

Chaque ensemble de transmission 4b comprend une barre de manœuvre 5b montée sur le tube de torsion 3 pour s'étendre parallèlement à l'axe primaire de rotation 107 et pivoter sans coulissement selon ledit axe.

La barre de manœuvre 5b est reliée par un premier organe de liaison mécanique 21b' à un pignon 6b monté dans la platine porte-actionneur 7 par des roulements pour être fixe en translation et mobile en rotation autour d'un axe secondaire de rotation 6b' colinéaire à l'axe longitudinal de la barre de manœuvre 5b. Le premier organe de liaison mécanique 21b' assure une liaison encastrement de l'extrémité de la barre de manœuvre 5b dans le pignon 6b. Le premier organe de liaison mécanique peut être une soudure, de la colle, un emboîtement, un ajustement serré, un boulon, une goupille... Ici la barre de manœuvre 5b est en une seule pièce avec le pignon 6b. Ainsi, une rotation du pignon 6b provoque une rotation de la barre de manœuvre 5b dans un sens ou dans l'autre, selon le sens de rotation du pignon 6b. Les pignons 6b engrènent avec une denture interne de la couronne précitée qui entoure les pignons 6a. La barre de manœuvre 5b est reliée par un deuxième organe de liaison mécanique 22b' à chaque stator 2b. Chaque deuxième organe de liaison mécanique 22b' comprend un filet s'étendant autour de la barre de manœuvre 5b et coopérant avec un taraudage ménagé dans la circonférence interne du stator 2b. Les deux deuxièmes organes de liaison mécanique 22b' assurent une liaison hélicoïdale entre la barre de manœuvre 5a et les stators 2b.

Les liaisons hélicoïdales formées entre les stators 2b et chaque barre de manœuvre 5b sont de sens opposé à la liaison hélicoïdale formée entre les stators 2a et chaque barre de manœuvre 5a. On comprend donc que quand la couronne tourne dans un sens, elle entraîne les pignons 6a, 6b et les barres de manœuvre 5a, 5b dans le même sens ; en revanche, les stators 2a se déplacent dans un sens opposé au sens de déplacement des stators 2b. Une rotation de la couronne dans un premier sens provoque donc un rapprochement des stators 2a avec les stators 2b respectivement (l'entrefer avec les rotors 1 diminue) tandis qu'une rotation de la couronne dans un deuxième sens provoque un éloignement des stators 2a d'avec les stators 2b respectivement (l'entrefer avec les rotors 1 augmente).

Bien entendu, l'invention n'est pas limitée aux modes de réalisation décrits mais englobe toute variante entrant dans le champ de l'invention telle que définie par les revendications.

En particulier, le dispositif peut avoir une structure différente de celle décrite.

Les aimants peuvent être portés par le rotor au lieu du stator, deux rotors encadrant un stator.

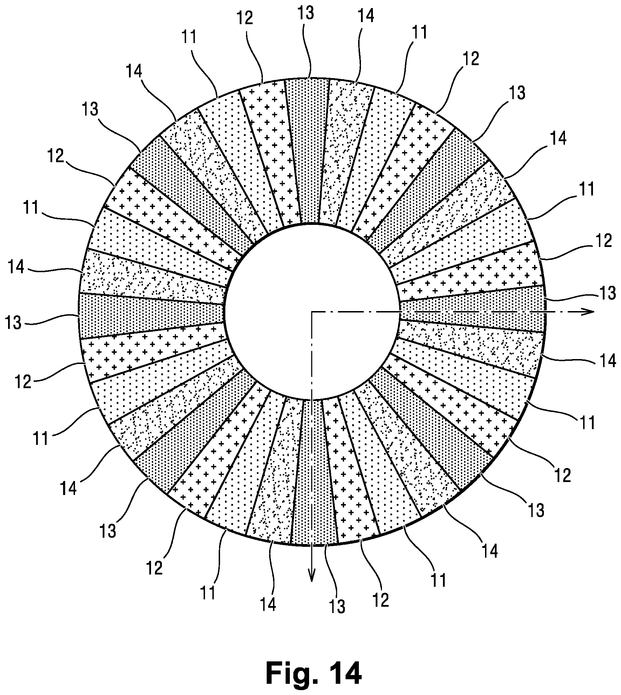

La forme, l'agencement et les dimensions des aimants peuvent être différents de ceux décrits. Par exemple, et selon le troisième mode de réalisation représenté sur la figure 14, les aimants 11, 12, 13, 14 ont tous les mêmes dimensions. De préférence, les premiers aimants 11, 13 représenteront 70% environ de la surface de l'élément qui les porte mais ce n'est pas obligatoire.

Il est avantageux mais pas obligatoire d'avoir un agencement d'aimants selon lequel la pluralité d'aimants comprend des premiers aimants 11, 13 et des deuxièmes aimants 12, 14 disposés en alternance, les premiers aimants 11, 13 ayant un premier vecteur de magnétisation sensiblement perpendiculaire aux surfaces en regard 1.1, 1.2, 2.1 et chacun des deuxièmes aimants 12, 14 ayant un deuxième vecteur de magnétisation sensiblement perpendiculaire aux premiers vecteurs de magnétisation des deux premiers aimants entre lesquels il se trouve ; et les aimants 11, 12, 13, 14 ont des largeurs telles que les premiers aimants 11, 13 sont espacés deux à deux d'une première distance inférieure à une deuxième distance séparant deux à deux les deuxièmes aimants 12, 14.

L'utilisation d'un motif de Halbach n'est pas obligatoire. Le nombre de rotors et/ou le nombre de stators peuvent être différents de ceux mentionnés.

Bien que le rotor et le stator aient été décrits sous la forme de disques parallèles et en regard l'un de l'autre, le stator et le rotor peuvent avoir d'autres formes. Le dispositif décrit est à flux axial mais l'invention est applicable à un fonctionnement en flux radial. Ainsi, le triplet peut par exemple être agencé sous la forme d'un tambour externe et d'un tambour interne entre lesquels s'étend un tambour central de telle manière que le tambour central ait une surface extérieure en regard d'une surface intérieure du tambour externe et une surface intérieure en regard d'une surface extérieure du tambour interne. Les aimants sont portés par la surface extérieure du tambour interne et par la surface intérieure du tambour externe.

Le dispositif de freinage magnétique selon l'invention peut être associé à un dispositif de freinage à friction classique qui comprend des organes de friction, par exemple une pile de disques de carbone, et une pluralité d'actionneurs électromécaniques portés par un porte-actionneurs. Chaque actionneur électromécanique comprend un moteur électrique et un poussoir apte à être déplacé par le moteur électrique pour presser la pile de disques. L'actionneur électromécanique est ainsi destiné à produire un effort de freinage commandé sur la pile de disques. Un mode de pilotage des dispositifs de freinage est par exemple connu du document FR-A-2953196.

En variante, les aimants peuvent être directement fixés sur les disques statoriques du frein à friction, ou les aimants peuvent être recouverts d'une garniture de friction, de sorte que le dispositif de freinage assure un freinage magnétique pour ralentir la roue quand les disques sont écartés les uns des autres d'un entrefer adéquat et un freinage par friction lorsque les disques sont appliqués les uns contre les autres. Il n'y a donc plus de butée axiale entre les disques dans ce mode de réalisation.

Dans le deuxième mode de réalisation, il est possible d'avoir sur une même barre de manœuvre des liaisons hélicoïdales de sens opposés, par exemple en rapportant sur la barre de manœuvre des douilles filetées extérieurement. Une même barre de manœuvre peut alors déplacer les deux stators d'un même jeu.

L'invention est utilisable sur tout type de véhicule.

## Revendications

1. Roue comprenant une jante (105) montée pour tourner sur un support (7) comprenant un arbre (102) définissant un axe primaire de rotation (107), et un dispositif de freinage magnétique à courant de Foucault comprenant au moins un premier jeu de freinage (I) comportant un premier stator (2a) et un deuxième stator (2b) qui sont liés au support et un rotor (1) lié à la jante (105) et disposé entre les stators (2a, 2b) de telle manière que chaque stator (2a, 2b) ait une première face (2.1) en regard d'une face (1.1, 1.2) du rotor (2a, 2b) et séparée de ladite face par un entrefer (e), le rotor (1) étant en matériau électriquement conducteur et les stators (2a, 2b) portant une pluralité d'aimants (11, 12, 13, 14) émettant via la première face (2.1) un flux magnétique apte à engendrer, en fonction de l'entrefer (e), des courants de Foucault dans le rotor (1) lorsque le rotor (1) pivote avec la roue, le dispositif comprenant un actionneur (4), **caractérise en ce que** l'actionneur comprend au moins un premier ensemble de transmission (4a) et un deuxième ensemble de transmission (4b) comportant chacun un pignon (6a, 6b) monté sur le support (7) pour pivoter autour d'un axe secondaire de rotation (6a', 6b') parallèle à l'axe primaire (107), une barre de manœuvre (5, 5b) s'étendant selon l'axe secondaire (6a', 6b'), un premier organe de liaison mécanique (21a, 21b ; 21a', 21b') reliant la barre de manœuvre (5a, 5b) au pignon (6a, 6b) de l'ensemble de transmission concerné et au moins un deuxième organe de liaison mécanique (22a, 22b ; 22a', 22b') reliant la barre de manœuvre (5a, 5b) à un des stators (2a, 2b) ; et **en ce que** les organes de liaison mécanique sont agencés de telle manière que la rotation des pignons provoque un déplacement des stators parallèlement à l'axe secondaire en des sens opposés pour faire varier l'entrefer, au moins l'un des organes de liaison mécanique de chaque ensemble de transmission étant agencé pour assurer une liaison hélicoïdale de type vis/écrou.

2. Roue selon la revendication 1, dans laquelle le premier ensemble de transmission (4a) est lié au premier stator (2a) et le deuxième ensemble de transmission (4b) est lié au deuxième stator (2b) ; la barre de manœuvre (5a, 5b) de chaque ensemble de transmission est montée sur le support pour être fixe en rotation et pour coulisser selon l'axe secondaire (6a', 6b'), le premier organe de liaison mécanique (21a) assure la liaison hélicoïdale et le deuxième organe de liaison mécanique (22a) est agencé pour lier la barre de manœuvre (5a, 5b) et le stator (2a, 2b) concerné en translation selon l'axe secondaire de telle manière que la rotation du pignon (6a, 6b) de chaque ensemble de transmission provoque la translation de la barre de manœuvre (5a, 5b) et du stator (2a, 2b) concerné selon l'axe secondaire, la liaison hélicoïdale du premier ensemble de transmission (4a) et la liaison hélicoïdale du deuxième ensemble de transmission (4b) ayant des sens opposés.

3. Roue selon la revendication 2, dans laquelle le deuxième organe de liaison mécanique (22a, 22b) comprend deux butées solidaires de la barre de manœuvre (5a, 5b) et encadrant une portion du stator (2a, 2b) concerné pour entraîner le stator (2a, 2b) concerné avec la barre de manœuvre (5a, 5b).

4. Roue selon la revendication 2 ou 3, comprenant deux jeux de freinage (I, II) comprenant chacun un premier stator (2a) et un deuxième stator (2b) encadrant le rotor (1) ; dans laquelle le premier ensemble de transmission (4a) comprend deux deuxièmes organes de liaison mécanique (22a) reliant la barre de manœuvre (5a) aux deux premiers stators (2a) et le deuxième ensemble de transmission (4b) comprend deux deuxièmes organes de liaison mécanique (22b) reliant la barre de manœuvre (5b) aux deux deuxième stators (2b).

5. Roue selon la revendication 1, dans laquelle les barres de manœuvre (5a, 5b) sont montées sur le support (7) pour être fixes en translation et libres en rotation selon l'axe secondaire (6a', 6b'), le premier organe de liaison mécanique (21a', 21b') est agencé pour lier en rotation le pignon (6a, 6b) et la barre de manœuvre (5a, 5b) de l'ensemble de transmission concerné et le deuxième organe de liaison mécanique (22a', 22b') de chaque barre de manœuvre (5a, 5b) de chaque ensemble de transmission assure la liaison hélicoïdale avec le stator (2a, 2b) de telle manière que la rotation du pignon (6a, 6b) et de la barre de manœuvre (5a, 5b) de chaque ensemble de transmission entraîne une translation du stator (2a, 2b) selon l'axe secondaire, la liaison hélicoïdale du premier stator (2a) et la liaison hélicoïdale du deuxième stator (2b) ayant des sens opposés.

6. Roue selon la revendication 5, dans laquelle le premier organe de liaison mécanique (21a', 21b') de chaque ensemble de transmission comprend un encastrement du pignon (6a, 6b) sur la barre de manœuvre (5a, 5b) de l'ensemble de transmission concerné.

7. Roue selon la revendication 5 ou 6, comprenant deux jeux de freinage (I, II) comprenant chacun un premier stator (2a) et un deuxième stator (2b) encadrant le rotor (1) ; dans laquelle chaque ensemble de transmission (4a, 4b) comprend deux deuxièmes organes de liaison mécanique (22a', 22b') reliant la barre de manœuvre (5a, 5b) aux deux premiers stators (2a) et aux deux deuxièmes stators (2b).

8. Roue selon l'une quelconque des revendications précédentes, dans laquelle le dispositif de freinage comprend une couronne motrice commune (8) ayant une denture intérieure engrenant avec le pignon (6a, 6b) de chaque ensemble de transmission (4a, 4b).

9. Roue selon la revendication 8, dans laquelle au moins un pignon moteur (9) est monté à rotation sur le support (7) pour engrener avec la denture intérieure de la couronne motrice commune (8).

10. Roue selon l'une quelconque des revendications 1 à 7, dans laquelle le dispositif de freinage comprend deux couronnes motrices communes (8a, 8b), coaxiales l'une à l'autre, l'une engrenant avec le pignon (6a) des premiers ensembles de transmission (4a) et l'autre engrenant avec le pignon (6b) des deuxièmes ensembles de transmission (4b).

11. Roue selon l'une quelconque des revendications 1 à 7, dans laquelle le dispositif de freinage comprend un pignon moteur (9) engrenant avec le pignon (6b) du deuxième ensemble de transmission (4b) qui lui-même engrène avec le pignon (6a) du premier ensemble de transmission (4a).

12. Roue selon l'une quelconque des revendications 1 à 11, dans laquelle les aimants (11, 12, 13, 14) sont disposés de telle manière que les stators (2) s'attirent mutuellement.

13. Roue selon la revendication 12, dans lequel le rotor (1) a une épaisseur telle qu'un effet de peau soit engendré depuis chaque face (1.1, 1.2) du rotor (1) sur plus de la moitié de l'épaisseur du rotor (1) au moins sur une plage de vitesses relatives possibles du rotor (1) par rapport aux stators (2).

14. Atterrisseur (101) comprenant une jambe (102) ayant une extrémité portant un arbre (103) sur lequel est monté le moyeu d'au moins une roue (104) selon l'une quelconque des revendications précédentes.

15. Aéronef pourvue d'au moins un atterrisseur selon la revendication 14.

## Patentansprüche

1. Rad umfassend eine Felge (105), welche drehbar auf einem Träger (7) angebracht ist, der eine Welle (102) umfasst, die eine primäre Drehachse (107) definiert, sowie eine magnetische Wirbelstrombremsvorrichtung, welche umfasst: zumindest einen ersten Bremssatz (I) mit einem ersten Stator (2a) und einem zweiten Stator (2b), die mit dem Träger verbunden sind, und mit einem mit der Felge (105) verbundenen Rotor (1), der derart zwischen den Statoren (2a, 2b) angeordnet ist, dass jeder Stator (2a, 2b) eine erste Fläche (2. 1) aufweist, die einer Fläche (1.1, 1.2) des Rotors (2a, 2b) gegenüberliegt und von dieser Fläche durch einen Spalt (e) getrennt ist, wobei der Rotor (1) aus einem elektrisch leitfähigen Material besteht und die Statoren (2a, 2b) eine Mehrzahl von Magneten (11, 12, 13, 14) tragen, die über die erste Fläche (2.1) einen magnetischen Fluss ausstrahlen, der dazu dient, in Abhängigkeit von dem Spalt (e) Wirbelströme in dem Rotor (1) zu erzeugen, wenn sich der Rotor (1) gemeinsam mit dem Rad dreht, wobei die Vorrichtung einen Aktuator (4) umfasst, **dadurch gekennzeichnet, dass** der Aktuator Folgendes umfasst: zumindest eine erste Getriebeanordnung (4a) und eine zweite Getriebeanordnung (4b), die jeweils ein Ritzel (6a, 6b) aufweisen, das drehbar um eine parallel zu der Primärachse (107) verlaufende sekundäre Drehachse (6a', 6b') an dem Träger (7) angebracht ist, eine Manövrierstange (5, 5b), die sich entlang der Sekundärachse (6a', 6b') erstreckt, ein erstes mechanisches Verbindungsorgan (21a, 21b ; 21a', 21b'), das die Manövrierstange (5a, 5b) mit dem Ritzel (6a, 6b) der betreffenden Getriebeanordnung verbindet, und zumindest ein zweites mechanisches Verbindungsorgan (22a, 22b; 22a', 22b'), das die Manövrierstange (5a, 5b) mit einem der Statoren (2a, 2b) verbindet; und dass die mechanischen Verbindungsorgane derart ausgelegt sind, dass die Rotation der Ritzel bewirkt, dass sich die Statoren parallel zu der Sekundärachse in entgegengesetzte Richtungen bewegen, um den Spalt zu verändern, wobei zumindest eines der mechanischen Verbindungsorgane jeder Getriebeanordnung dafür ausgelegt ist, eine helikoidale Verbindung vom Typ Schraube/Mutter sicherzustellen.

2. Rad nach Anspruch 1, wobei die erste Getriebeanordnung (4a) mit dem ersten Stator (2a) verbunden ist und die zweite Getriebeanordnung (4b) mit dem zweiten Stator (2b) verbunden ist; wobei die Manövrierstange (5a, 5b) jeder Getriebeanordnung drehfest und längsverschiebbar entlang der Sekundärachse (6a', 6b') auf dem Träger montiert ist, wobei das erste mechanische Verbindungsorgan (21a) die helikoidale Verbindung sicherstellt und das zweite mechanische Verbindungsorgan (22a) dafür ausgelegt ist, die Manövrierstange (5a, 5b) entlang der Sekundärachse längsverschiebbar mit dem betreffenden Stator (2a, 2b) zu verbinden, sodass die Rotation des Ritzels (6a, 6b) einer jeden Getriebeanordnung die Längsverschiebung der Manövrierstange (5a, 5b) und des betreffenden Stators (2a, 2b) entlang der Sekundärachse bewirkt, wobei die helikoidale Verbindung der ersten Getriebeanordnung (4a) und die helikoidale Verbindung der zweiten Getriebeanordnung (4b) einander entgegengesetzte Richtungen aufweisen.

3. Rad nach Anspruch 2, wobei das zweite mechanische Verbindungsorgan (22a, 22b) zwei mit der Manövrierstange (5a, 5b) fest verbundene Anschläge umfasst, die einen Teilabschnitt des betreffenden Stators (2a, 2b) umrahmen, um den betreffenden Stator (2a, 2b) mit der Manövrierstange (5a, 5b) anzutreiben.

4. Rad nach Anspruch 2 oder 3, umfassend zwei Bremssätze (I, II) mit jeweils einem ersten Stator (2a) und einem zweiten Stator (2b), die den Rotor (1) umrahmen; wobei die erste Getriebeanordnung (4a) zwei zweite mechanische Verbindungsorgane (22a) umfasst, die die Manövrierstange (5a) mit den beiden ersten Statoren (2a) verbinden, und die zweite Getriebeanordnung (4b) zwei zweite mechanische Verbindungsorgane (22b) umfasst, die die Manövrierstange (5b) mit den beiden zweiten Statoren (2b) verbinden.

5. Rad nach Anspruch 1, wobei die Manövrierstangen (5a, 5b) verschiebefest und frei drehbar entlang der Sekundärachse (6a', 6b') auf dem Träger (7) montiert sind, wobei das erste mechanische Verbindungsorgan (21a', 21b') dafür ausgelegt ist, das Ritzel (6a, 6b) und die Manövrierstange (5a, 5b) der betreffenden Getriebeanordnung drehbar zu verbinden, und das zweite mechanische Verbindungsorgan (22a', 22b') jeder Manövrierstange (5a, 5b) einer jeden Getriebeanordnung die helikoidale Verbindung mit dem Stator (2a, 2b) sicherstellt, sodass die Rotation des Ritzels (6a, 6b) und der Manövrierstange (5a, 5b) jeder Getriebeanordnung eine Längsverschiebung des Stators (2a, 2b) entlang der Sekundärachse bewirkt, wobei die helikoidale Verbindung des ersten Stators (2a) und die helikoidale Verbindung des zweiten Stators (2b) einander entgegengesetzte Richtungen aufweisen.

6. Rad nach Anspruch 5, wobei das erste mechanische Verbindungsorgan (21a', 21b') einer jeden Getriebeanordnung eine Einspannverbindung des Ritzels (6a, 6b) in der Manövrierstange (5a, 5b) der betreffenden Getriebeanordnung umfasst.

7. Rad nach Anspruch 5 oder 6, umfassend zwei Bremssätze (I, II) mit jeweils einem ersten Stator (2a) und einem zweiten Stator (2b), die den Rotor (1) umrahmen; wobei jede Getriebeanordnung (4a, 4b) zwei zweite mechanische Verbindungsorgane (22a', 22b') umfasst, die die Manövrierstange (5a, 5b) mit den beiden ersten Statoren (2a) und mit den beiden zweiten Statoren (2b) verbinden.

8. Rad nach einem der vorhergehenden Ansprüche, wobei die Bremsvorrichtung einen gemeinsamen Antriebskranz (8) umfasst, der eine Innenverzahnung aufweist, welche mit dem Ritzel (6a, 6b) einer jeden Getriebeanordnung (4a, 4b) in Eingriff steht.

9. Rad nach Anspruch 8, wobei zumindest ein Antriebsritzel (9) drehbar auf dem Träger (7) angebracht ist und mit der Innenverzahnung des gemeinsamen Antriebskranzes (8) in Eingriff steht.

10. Rad nach einem der Ansprüche 1 bis 7, wobei die Bremsvorrichtung zwei koaxial zueinander angeordnete, gemeinsame Antriebskränze (8a, 8b) umfasst, wobei der eine mit dem Ritzel (6a) der jeweiligen ersten Getriebeanordnungen (4a) in Eingriff steht und der andere mit dem Ritzel (6b) der jeweiligen zweiten Getriebeanordnungen (4b) in Eingriff steht.

11. Rad nach einem der Ansprüche 1 bis 7, wobei die Bremsvorrichtung ein Antriebsritzel (9) umfasst, das mit dem Ritzel (6b) der zweiten Getriebeanordnung (4b) in Eingriff steht, welches seinerseits mit dem Ritzel (6a) der ersten Getriebeanordnung (4a) in Eingriff steht.

12. Rad nach einem der Ansprüche 1 bis 11, wobei die Magneten (11, 12, 13, 14) derart angeordnet sind, dass sich die Statoren (2) gegenseitig anziehen.

13. Rad nach Anspruch 12, wobei der Rotor (1) eine solche Dicke aufweist, dass von jeder Seite (1.1, 1.2) des Rotors (1) über mehr als die Hälfte der Dicke des Rotors (1) zumindest innerhalb eines Bereichs möglicher Relativgeschwindigkeiten des Rotors (1) in Bezug auf die Statoren (2) ein Skin-Effekt erzeugt wird.

14. Fahrwerk (101) umfassend ein Bein (102) mit einem Ende, das eine Welle (103) trägt, auf welcher die Nabe von zumindest einem Rad (104) nach einem der vorhergehenden Ansprüche angebracht ist.

15. Luftfahrzeug, welches mit zumindest einem Fahrwerk nach Anspruch 14 ausgestattet ist.

## Claims

1. Wheel comprising a rim (105) mounted to rotate on a support (7) comprising a shaft (102) defining a primary rotational axis (107), and an eddy current magnetic braking device comprising at least one first braking set (I) comprising a first stator (2a) and a second stator (2b) which are connected to the support and a rotor (1) connected to the rim (105) and disposed between the stators (2a, 2b), such that each stator (2a, 2b) has a first face (2.1) opposite a face (1.1, 1.2) of the rotor (2a, 2b) and separated from said face by an air gap (e), the rotor (1) being made of electrically conductive material and the stators (2a, 2b) carrying a plurality of magnets (11, 12, 13, 14) emitting via the first face (2.1), a magnetic flux capable of causing, in accordance with the air gap (e), eddy currents in the rotor (1) when the rotor (1) pivots with the wheel, the device comprising an actuator (4), **characterized in that** the actuator comprises at least one first transmission assembly (4a) and one second transmission assembly (4b) each comprising a pinion (6a, 6b) mounted on the support (7) to pivot about a secondary rotational axis (6a', 6b') parallel to the primary axis (107), an operating bar (5, 5b) extending about the secondary axis (6a', 6b'), a first mechanical connecting member (21a, 21b; 21a', 21b') connecting the operating bar (5a, 5b) to the pinion (6a, 6b) of the transmission assembly in question and at least one second mechanical connecting member (22a, 22b; 22a', 22b') connecting the operating bar (5a, 5b) to one of the stators (2a, 2b); and **in that** the mechanical connecting members are arranged, such that the rotation of the pinions causes a movement of the stators parallel to the secondary axis in opposite directions, for varying the air gap, at least one of the mechanical connecting members of each transmission assembly being arranged to ensure a screw-nut helical connection.

2. Wheel according to claim 1, wherein the first transmission assembly (4a) is linked to the first stator (2a) and the second transmission assembly (4b) is linked to the second stator (2b); the operating bar (5a, 5b) of each transmission assembly is mounted on the support to be rotatably stationary and to slide about the secondary axis (6a', 6b'), the first mechanical connecting member (21a) ensures the helical connection and the second mechanical connecting member (22a) is arranged to link the operating bar (5a, 5b) and the stator (2a, 2b) in question in translation about the secondary axis, such that the rotation of the pinion (6a, 6b) of each transmission assembly causes the translation of the operating bar (5a, 5b) and of the stator (2a, 2b) in question about the secondary axis, the helical connection of the first transmission assembly (4a) and the helical connection of the second transmission assembly (4b) having opposite directions.

3. Wheel according to claim 2, wherein the second mechanical connecting member (22a, 22b) comprises two abutments integral with the operating bar (5a, 5b) and flanking a portion of the stator (2a, 2b) in question to drive the stator (2a, 2b) related with the operating bar (5a, 5b).

4. Wheel according to claim 2 or 3, comprising two braking sets (I, II), each comprising a first stator (2a) and a second stator (2b) flanking the rotor (1); wherein the first transmission assembly (4a) comprises two second mechanical connecting members (22a) connecting the operating bar (5a) to the two first stators (2a) and the second transmission assembly (4b) comprises two second mechanical connecting members (22b) connecting the operating bar (5b) to the two second stators (2b).

5. Wheel according to claim 1, wherein the operating bars (5a, 5b) are mounted on the support (7) to be stationary in translation and rotatably free about the secondary axis (6a', 6b'), the first mechanical connecting member (21a', 21b') is arranged to rotatably connect the pinion (6a, 6b) and the operating bar (5a, 5b) of the transmission assembly related and the second mechanical connecting member (22a', 22b') of each operating bar (5a, 5b) of each transmission assembly ensures the helical connection with the stator (2a, 2b), such that the rotation of the pinion (6a, 6b) and of the operating bar (5a, 5b) of each transmission assembly drives a translation of the stator (2a, 2b) about the secondary axis, the helical connection of the first stator (2a) and the helical connection of the second stator (2b) having opposite directions.

6. Wheel according to claim 5, wherein the first mechanical connecting member (21a', 21b') of each transmission assembly comprises a flush-mounting of the pinion (6a, 6b) on the operating bar (5a, 5b) of the transmission assembly related.

7. Wheel according to claim 5 or 6, comprising two braking sets (I, II) each comprising a first stator (2a) and a second stator (2b) flanking the rotor (1); wherein each transmission assembly (4a, 4b) comprises two mechanical connecting members (22a', 22b') connecting the operating bar (5a, 5b) to the two first stators (2a) and to the two second stators (2b).

8. Wheel according to any one of the preceding claims, wherein the braking device comprises a common drive crown (8) having an inner gearing meshing with the pinion (6a, 6b) of each transmission assembly (4a, 4b).

9. Wheel according to claim 8, wherein at least one drive pinion (9) is rotatably mounted on the support (7) to mesh with the inner gearing of the drive motor crown (8).

10. Wheel according to any one of claims 1 to 7, wherein the braking device comprises two common drive crowns (8a, 8b), coaxial to one another, one meshing with the pinion (6a) of the first transmission assemblies (4a) and the other meshing with the pinion (6b) of the second transmission assemblies (4b).

11. Wheel according to any one of claims 1 to 7, wherein the braking device comprises a drive pinion (9) meshing with the pinion (6b) of the second transmission assembly (4b) which itself meshes with the pinion (6a) of the first transmission assembly (4a).

12. Wheel according to any one of claims 1 to 11, wherein the magnets (11, 12, 13, 14) are disposed, such that the stators (2) are mutually attracted.

13. Wheel according to claim 12, wherein the rotor (1) has a thickness, such that a skin effect is caused from each face (1.1, 1.2) of the rotor (1) over more than half of the thickness of the rotor (1) at least over a range of possible relative speeds of the rotor (1) with respect to the stators (2).

14. Landing gear (101) comprising a strut (102) having an end carrying a shaft (103) on which is mounted the hub of at least one wheel (104) according to any one of the preceding claims.

15. Aircraft provided with at least one landing gear according to claim 14.
